# EUROPÄISCHE PATENTANMELDUNG

(11) **EP 3 819 834 A1**
(43) Veröffentlichungstag der Anmeldung: **12.05.2021**
(21) Anmeldenummer: 19207199.1
(22) Anmeldetag: 05.11.2019
(51) Int. Cl.: G06Q 10/06, G06F 3/023, G06Q 50/12, G06Q 30/02, G08B 7/06

(54) **INTERAKTIONSVORRICHTUNG IM SERVICEBEREICH**

(71) Anmelder: Ratiotec GmbH & Co. KG, 45136 Essen (DE)
(72) Erfinder: Schneider, Manuel, 45479 Mülheim (DE)
(74) Vertreter: Andrejewski - Honke Patent- und Rechtsanwälte Partnerschaft mbB

(57) **Zusammenfassung**

Interaktionsvorrichtung im Servicebereich mit einer Mehrzahl von mobilen stromnetzunabhängigen drahtlos sendenden Signalsendeeinrichtungen. Jede Signalsendeeinrichtung ist einem oder mehreren Kunden zugeordnet. Die Signalsendeeinrichtung weist eine Mehrzahl von festintegrierten Tasten mit jeweils spezifischer und/oder benutzerdefinierter Funktionszuordnung auf. Die Tasten sind von den Kunden zum drahtlosen Senden von Signalen in Form von Serviceanweisungen und/oder Servicebewertungen betätigbar. Ein von einer Signalsendeeinrichtung nach Betätigung einer Taste ausgesendetes Signal wird über eine Mehrzahl von Repeatern übertragen und von einem mobilen Empfangsgerät des Servicepersonals empfangen und/oder von einer zentralen Steuerungseinrichtung empfangen.

## Beschreibung

Die Erfindung betrifft eine Interaktionsvorrichtung im Servicebereich mit einer Mehrzahl von Signalsendeeinrichtungen, wobei jede Signalsendeeinrichtung einem Kunden zugeordnet ist. - Unter Servicebereich werden im Rahmen der Erfindung die verschiedensten Dienstleistungsbereiche verstanden. Nach besonders bevorzugter Ausführungsformen der Erfindung handelt es sich bei der erfindungsgemäßen Vorrichtung um eine Interaktionsvorrichtung im Servicebereich der Gastronomie. Nach anderen Ausführungsformen der Erfindung kann der Begriff Servicebereich aber auch Dienstleistungen im Einzelhandel, in Autohäusern, in Möbelhäusern, auf Messen, in Arztpraxen, in Krankenhäusern und dergleichen umfassen. Mit dem Begriff Kunden sind dementsprechend insbesondere Gäste im Bereich der Gastronomie gemeint, aber auch Kunden der genannten Einzelhandelsbetriebe sowie Patienten bei Ärzten und in Krankenhäusern und dergleichen Personen.

Interaktionsvorrichtungen im Servicebereich sind grundsätzlich aus der Praxis bekannt. So ist es hinlänglich bekannt, dass beispielsweise Bewertungen von Dienstleistungen an einem Smartphone oder an einem Rechner eingegeben werden können. Das ist jedoch für die Kunden in dem betreffenden Dienstleistungsbereich bzw. Servicebereich verhältnismäßig aufwendig. Oftmals sind Kunden nach Inanspruchnahme einer Dienstleistung zu späteren Zeitpunkten nicht mehr bereit eine positive Bewertung für die Dienstleistung in der beschriebenen Weise abzugeben. Erfahrungsgemäß gilt dies jedoch häufig nicht für negative Bewertungen, so dass ein Bewertungsprofil nicht selten ein sehr subjektives Bild der angebotenen Dienstleistung wiedergibt.

Es sind auch bereits Vorrichtungen mit Signalsendeeinrichtungen bekannt, mit denen man Serviceanweisungen an ein Servicepersonal weiterleiten kann.

Diese Einrichtungen sind häufig sehr aufwendig und komplex gestaltet und auch die Bedienfreundlichkeit lässt zu wünschen übrig. Insoweit besteht Verbesserungsbedarf.

Der Erfindung liegt das technische Problem zugrunde, eine Interaktionsvorrichtung im Servicebereich der eingangs genannten Art anzugeben, mit der auf einfache und sehr bedienenerfreundlicherweise Serviceanweisungen und/oder Servicebewertungen übermittelt werden können und die es dem Bediener ermöglicht kurzfristig entsprechende Anweisungen und/oder Bewertungen abzusenden bzw. durchzuführen.

Zur Lösung dieses technischen Problems lehrt die Erfindung eine Interaktionsvorrichtung im Servicebereich mit einer Mehrzahl von mobilen stromnetzunabhängigen drahtlos sendenden Signalsendeeinrichtungen, wobei jede Signalsendeeinrichtung einem oder mehreren Kunden zugeordnet ist,
wobei die Signalsendeeinrichtung eine Mehrzahl von fest integrierten Tasten mit jeweils spezifischer und/oder benutzerdefinierter Funktionszuordnung aufweist, wobei die Tasten von dem Kunden zum drahtlosen Senden von Signalen in Form von Serviceanweisungen und/oder Servicebewertungen betätigbar sind,
wobei ein von einer Signalsendeeinrichtung nach Betätigung einer Taste ausgesendetes Signal über eine Mehrzahl von Repeatern übertragen wird und von einem mobilen Empfangsgerät des Servicepersonals empfangen wird und/oder von einer zentralen Steuerungseinrichtung empfangen wird.

Es liegt im Rahmen der Erfindung, dass die Signalsendeeinrichtungen batteriebetrieben und/oder akkumulatorbetrieben ausgelegt sind. Insoweit ist eine erfindungsgemäße Signalsendeeinrichtung flexibel, separat und grundsätzlich weitgehend ortsunabhängig einsetzbar.

Eine ganz besonders bevorzugte Ausführungsform der Erfindung ist dadurch gekennzeichnet, dass die Signalsendeeinrichtung eine Mehrzahl von fest integrierten Tasten mit spezifischer und/oder benutzerdefinierter Funktionszuordnung aufweist und wobei die Tasten von dem Kunden zum drahtlosen Senden von Signalen in Form von Serviceanweisungen und Servicebewertungen betätigt werden können. Mit einer solchen bevorzugten Signalsendeeinrichtung sollen also in Kombination sowohl Serviceanweisungen als auch Servicebewertungen gesendet werden. Auch insoweit ist die Signalsendeeinrichtung unabhängig und flexibel einsetzbar.

Eine empfohlene Ausführungsform der Erfindung ist dadurch gekennzeichnet, dass jede Signalsendeeinrichtung zwei bis zehn, insbesondere zwei bis acht und besonders bevorzugt zwei bis sechs fest integrierten Tasten aufweist. Dabei ist zweckmäßigerweise ein Teil der Tasten zum Senden von Signalen in Form von Serviceanweisungen und ein anderer Teil der Tasten zum Senden von Signalen in Form von Servicebewertungen ausgelegt. Es liegt im Rahmen der Erfindung, dass zumindest ein Teil der Tasten mit entsprechenden grafischen Symbolen gekennzeichnet wird. So werden zweckmäßigerweise die Tasten für die Servicebewertungen mit Emoticons bzw. mit sogenannten Smileys gekennzeichnet. Empfohlenermaßen stehen für die Servicebewertungen zumindest drei Tasten zur Verfügung, die dem Bewertungsstatus "positiv", "neutral" und "negativ" zugeordnet sind. Die den Serviceanweisungen zugeordneten Tasten umfassen vorzugsweise zumindest zwei Tasten, wobei eine Taste insbesondere der Serviceanweisung "Servicepersonal anfordern" zugeordnet ist und wobei bewährtermaßen eine weitere Taste der Serviceanweisungen "Rechnung anfordern" zugeordnet ist.

Gemäß einer Ausführungsform der Erfindung ist fernerhin eine Bestätigungstaste auf der Signalsendeeinrichtung vorgesehen.

Eine ganz besonders empfohlene Ausführungsform der Erfindung ist dadurch gekennzeichnet, dass die Tasten einer Signalsendeeinrichtung als kapazitive Tasten ausgelegt sind. Die Tasten können dementsprechend lediglich durch leichte Fingerberührung (kapazitive Berührung) betätigt werden. Besonders bevorzugt ist im Rahmen der Erfindung die Betätigungsfläche für die Tasten als ebene Platte bzw. Scheibe ausgebildet, auf der vorzugsweise die Funktionssymbole für die kapazitiven Tasten aufgebracht bzw. aufgedruckt sind. Die Platte bzw. Scheibe ist zweckmäßigerweise eben und glatt und empfohlenermaßen ohne Vertiefungen, Erhebungen oder sonstige Profilierungen ausgebildet. Diese Ausgestaltung hat unter anderem den Vorteil, dass die Platte bzw. Scheibe - mit zweckmäßigerweise aufgebrachten Symbolen - auf einfache Weise ausgetauscht werden kann, beispielsweise gegen eine Platte bzw. Scheibe mit alternativen Funktionssymbolen. Im Übrigen hat eine solche Platte bzw. Scheibe auch den Vorteil, dass darauf Symbole bzw. Logos des entsprechenden Serviceanbieters oder aber anderweitige Werbesymbole aufgebracht bzw. aufgedruckt werden können. Fernerhin kann eine solche ebene und glatte Platte bzw. Scheibe auf einfache und wenig aufwändige Weise gereinigt werden. Der Ausbildung der Tasten der erfindungsgemäßen Signalsendeeinrichtungen kommt im Rahmen der Erfindung besondere Bedeutung zu.

Es liegt im Rahmen der Erfindung, dass eine Signalsendeeinrichtung der erfindungsgemäßen Interaktionsvorrichtung als kompaktes Bauteil ausgebildet ist. Vorzugsweise handelt es sich dabei um eine Signalsendeeinrichtung, die in einem Gehäuse bzw. kompakten Gehäuse untergebracht ist und zwar vorzugsweise in einem quaderförmigen Gehäuse. Nach empfohlener Ausführungsform der Erfindung beträgt das Volumen einer Signalsendeeinrichtung bzw. das Volumen des Gehäuses einer Signalsendeeinrichtung weniger als 1000 cm³, insbesondere weniger als 700 cm³, bevorzugt weniger als 500 cm³ und sehr bevorzugt weniger als 300 cm³. Zweckmäßigerweise bildet die oben beschriebene ebene Platte bzw. Scheibe die Oberseite des Gehäuses einer Signalsendeeinrichtung. Bei der bevorzugten Ausgestaltung der Tasten als kapazitive Tasten kann die Platte bzw. Scheibe mit den bewährtermaßen aufgebrachten Funktionssymbolen problemlos ausgetauscht werden, ohne dass das übrige Gehäuse der Signalsendeeinrichtung geändert werden muss.

Eine empfohlene Ausführungsform, der im Rahmen ganz besondere Bedeutung zukommt, ist dadurch gekennzeichnet, dass die Signale in Form von Bluetooth-Signalen von einer Signalsendeeinrichtung ausgesendet werden. Dementsprechend werden dann die Bluetooth-Signale über eine Mehrzahl von Repeatern übertragen und von einem mobilen Empfangsgerät und/oder von einer zentralen Steuereinrichtung empfangen. - Grundsätzlich sind aber auch andere Arten von Signalübermittlungen möglich, beispielsweise die Übermittlung von RF-Signalen oder von ZigBee-Signalen.

Erfindungsgemäß wird ein von einer Signalsendeeinrichtung ausgesendetes Signal über eine Mehrzahl von Repeatern übertragen. Zweckmäßigerweise ist ein zweidimensionales oder ein dreidimensionales Netzwerk einer Mehrzahl bzw. einer Vielzahl von Repeatern eingerichtet. Es liegt im Rahmen der Erfindung, dass bei zumindest einem Teil der Repeater der gegenseitige Abstand von zwei Repeatern mindestens 10 m, insbesondere mindestens 20 m beträgt. Der gegenseitige Abstand von zwei Repeatern beträgt bei Indoor-Anwendungen vorzugsweise maximal 50 m und bei Outdoor-Anwendungen zweckmäßigerweise maximal 200 m.

Die Signale werden von den Repeatern zu mobilen Empfangsgeräten des Servicepersonals und/oder zu einer zentralen Steuerungseinrichtung übertragen. Es liegt dabei im Rahmen der Erfindung, dass die Signale von den Repeatern unmittelbar an ein mobiles Empfangsgerät des Servicepersonals gesendet werden. Nach bevorzugter Ausführungsform, der im Rahmen der Erfindung ganz besondere Bedeutung zukommt, ist ein mobiles Empfangsgerät des Servicepersonals als Armband mit Bildschirm, insbesondere als elektronische Uhr mit Bildschirmanzeige (Smartwatch) ausgebildet. Die Ausbildung des Empfangsgerätes des Servicepersonals als Smartwatch hat sich besonders bewährt und ist in Kombination mit den übrigen Merkmalen der Erfindung besonders vorteilhaft.

Es liegt im Rahmen der Erfindung, dass das Servicepersonal bzw. ein Mitarbeiter des Servicepersonals an dem mobilen Empfangsgerät bzw. an der Smartwatch die Art der Serviceanweisung sowie den Absender identifizieren kann. - Zusätzlich werden diese Informationen bzw. Daten auf einer Übersichtsseite (Dashboard) angezeigt. Dieses Dashboard liefert den Mitarbeitern des Servicepersonals zweckmäßigerweise eine vollständige Übersicht aller offenen Service-Anforderungen. Es liegt weiterhin im Rahmen der Erfindung, dass ein Mitarbeiter des Servicepersonals eine Serviceanweisung an einer Signalsendeeinrichtung des Servicepersonals quittieren kann und abschließen kann.

Vorzugsweise werden die von den Signalsendeeinrichtungen der Kunden gesendeten Signale über eine Mehrzahl von Repeatern an eine zentrale Steuerungseinrichtung übertragen. Die zentrale Steuerungseinrichtung ist zweckmäßigerweise als Mesh-Box ausgebildet. Nach besonders bevorzugter Ausführungsform der Erfindung werden die Signale von der zentralen Steuerungseinrichtung an ein Dashboard zur Darstellung der Serviceanweisungen und/oder der Servicebewertungen übermittelt. Vorzugsweise wird das Dashboard als Website bereitgestellt. Die Serviceanweisungen können hier von den Mitarbeitern des Servicepersonals überprüft werden. Die Servicebewertungen können in ein Bewertungsportal unmittelbar einfließen. Die Erfindung zeichnet sich somit in dieser Hinsicht durch den Vorteil aus, dass die Kunden unmittelbar vor Ort eine Bewertung vornehmen und diese Servicebewertungen direkt in ein Bewertungsportal einer Website einfließen können. Es liegt im Übrigen auch im Rahmen der Erfindung, dass die Signale von der zentralen Steuerungseinrichtung - insbesondere von der Mesh-Box - an eine Cloud weitergeleitet werden.

Es ist im Rahmen der Erfindung auch möglich, dass die Interaktion zwischen Mitarbeitern und/oder Abteilungen des Servicepersonals über die erfindungsgemäßen Signalsendeeinrichtungen stattfindet und dass die Signalsendeeinrichtungen hierzu vorzugsweise frei programmierbare Tasten aufweisen. Auf diese Weise kann z. B. eine Kommunikation zwischen dem Küchenpersonal und dem Bedienpersonal in der Gastronomie stattfinden.

Eine empfohlene Ausführungsform der Erfindung zeichnet sich dadurch aus, dass in unmittelbarer Umgebung einer Signalsendeeinrichtung eines Kunden ein Funkmeldeempfänger bzw. ein Pager angeordnet ist und dass dieser Funkmeldeempfänger bzw. Pager dem Kunden zugeordnet ist. Zweckmäßigerweise dient der Pager zur Detektion der ihm zugeordneten Signalsendeeinrichtung und zur anschließenden Signalmeldung der Detektion an das Servicepersonal bzw. an ein mobiles Empfangsgerät - insbesondere eine Smartwatch - des Servicepersonals. Der Pager dient somit insbesondere der Identifikation des jeweiligen Kunden (Raumposition), indem er die nächstliegende Signalsendeeinrichtung detektiert und dem Servicepersonal entsprechend meldet. Diese Meldung erfolgt nur dann, wenn die Signalsendeeinrichtung in einem bestimmten Abstandsbereich von dem Pager entfernt angeordnet ist. Zweckmäßigerweise ist der Pager in einer Umgebung der ihm zugeordneten Signalsendeeinrichtung mit einem Radius von weniger als 200 cm, insbesondere von weniger als 150 cm und bevorzugt von weniger als 100 cm angeordnet. Es liegt im Rahmen der Erfindung, dass die Signalmeldung des Pagers dem Servicepersonal eine Ortung des Kunden bzw. des Aufenthaltsortes des Kunden ermöglicht und bevorzugt auch die Identifikation einer gesendeten Serviceanweisung ermöglicht.

Eine besonders empfohlene Ausführungsform, der im Rahmen der Erfindung besondere Bedeutung zukommt, ist dadurch gekennzeichnet, dass eine Signalsendeeinrichtung eine Diebstahlwarneinrichtung aufweist. Dabei ist die Diebstahlwarneinrichtung vorzugsweise mittels zumindest eines Beschleunigungssensors aktivierbar. Zweckmäßigerweise erfolgt die Diebstahlerkennung einer Signalsendeeinrichtung mittels der Parameter Lage und Beschleunigung und zwar mit Hilfe zumindest eines Beschleunigungssensors. Empfohlenermaßen wird ein Diebstahlversuch signalisiert, wenn sich die Lage der Signalsendeeinrichtung ändert und wenn diese Lageänderung durch eine länger andauernde Beschleunigung ergänzt wird. Vorzugsweise funktioniert die Diebstahlwarneinrichtung einer Signalsendeeinrichtung über zwei Stufen, wobei in jeder der beiden Stufen ein spezifisches Signal erfolgt. Es empfiehlt sich, dass beide Stufen für die Auslösung des jeweiligen Signals entsprechend eingestellt werden können und zwar insbesondere bezüglich der zeitlichen Auslösung des jeweiligen Signals. - Gemäß einer Ausführungsvariante wird in einer ersten Stufe bei einer Veränderung der Lage der Signalsendeeinrichtung innerhalb eines kurzen Zeitraums - beispielsweise innerhalb weniger Sekunden - die Veränderung durch ein spezielles Signal - insbesondere durch ein Blinken von LEDs - an der Signalsendeeinrichtung angezeigt. Dadurch wird der Kunde gewarnt und gleichsam darauf hingewiesen, dass seine Manipulation erkannt wurde. Bei weiterer Veränderung der Lage der Signalsendeeinrichtung ist zweckmäßigerweise eine zweite Stufe vorgesehen, in der eine alternative Signalisierung erfolgt, beispielsweise eine akustische Signalisierung. Dadurch wird der Diebstahlversuch effektiv angezeigt. Es liegt im Rahmen der Erfindung, dass zusätzlich das Servicepersonal - insbesondere über ein mobiles Empfangsgerät - eine Signalisierung bzw. eine Information über den Diebstahlversuch erhält und zwar zweckmäßigerweise mit der Identifikation des Kunden (beispielsweise Tischnummer im Gastronomiebereich).

Der Erfindung liegt die Erkenntnis zugrunde, dass mit der erfindungsgemäßen Interaktionsvorrichtung eine sehr einfache und effektive Kommunikation im Servicebereich von Gewerbebetrieben und dergleichen zwischen den Kunden und dem Servicepersonal möglich ist. Die Vorrichtung ermöglicht eine effiziente Übermittlung und Identifikation von Serviceanweisungen und insoweit die zeitnahe Umsetzung durch das Servicepersonal. Außerdem ist mit der erfindungsgemäßen Interaktionsvorrichtung eine unmittelbare Bewertung der Serviceleistungen und/oder des Servicepersonals durch den Kunden möglich sowie eine direkte bzw. zeitnahe Anzeige und Auswertung von Kundenbewertungen. Im Rahmen der Erfindung ist dabei von besonderer Bedeutung, dass diese vorteilhaften Eigenschaften mit einer relativ einfachen und wenig aufwendigen sowie kostengünstigen Interaktionsvorrichtung erreicht werden. Die einzelnen Komponenten der Interaktionsvorrichtung sind einfach und kompakt aufgebaut. Insbesondere zeichnen sich die erfindungsgemäßen Signalsendeeinrichtungen durch einen einfachen und wenig aufwendigen Aufbau aus. Besondere Bedeutung kommt dabei der Tastenausgestaltung der Signalsendeeinrichtung als kapazitive Tasten zu. Diese Ausgestaltung ermöglicht es, dass die Signalsendeeinrichtungen bzw. deren Gehäuse kompakt ausgestaltet werden können und dass die Signalsendeeinrichtungen vor allem variable Austauschmöglichkeiten bezüglich der Tastenbelegung und bezüglich der den Tasten zugeordneten Frontplatte bzw. Frontscheibe des Gehäuses bieten.

Nachfolgend wird die Erfindung anhand einer lediglich ein Ausführungsbeispiel darstellenden Zeichnung näher erläutert. Es zeigen in schematischer Darstellung:
- Figur 1: eine schematische Darstellung der erfindungsgemäßen Interaktionsvorrichtung mit den einzelnen bevorzugten Komponenten und
- Figur 2: eine perspektivische Ansicht einer Signalsendeeinrichtung für eine erfindungsgemäße Interaktionsvorrichtung.

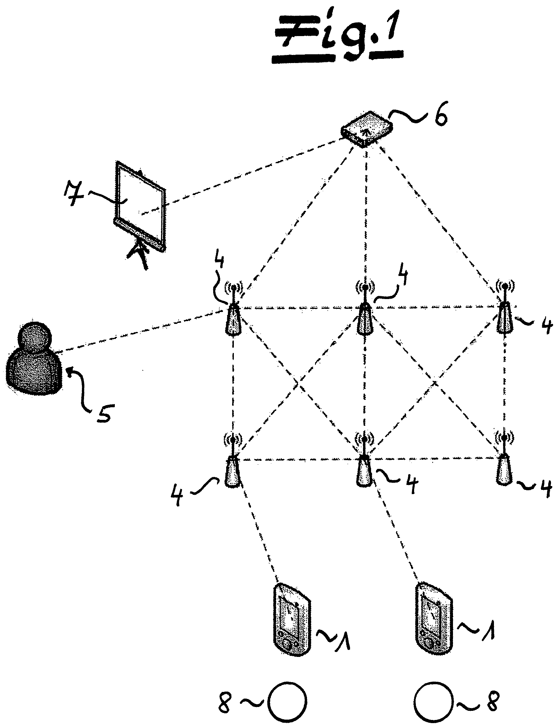

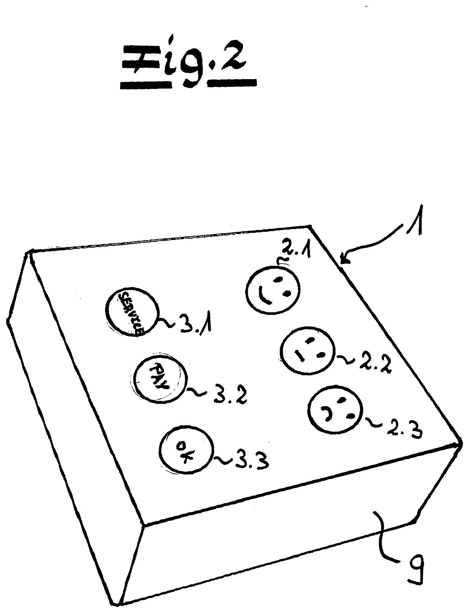

Die Figur 1 zeigt eine erfindungsgemäße Interaktionsvorrichtung im Servicebereich mit einer Mehrzahl von mobilen stromnetzunabhängigen drahtlos sendenden Signalsendeeinrichtungen 1. Im Ausführungsbeispiel nach Figur 1 sind der Einfachheit halber lediglich zwei Signalsendeeinrichtungen 1 dargestellt worden. Die Signalsendeeinrichtungen 1 des Ausführungsbeispiels mögen batteriebetrieben ausgelegt sein. Jede Signalsendeeinrichtung 1 ist einem Kunden zugeordnet, wobei es sich bei den Kunden im Ausführungsbeispiel um Gäste eines Gastronomiebetriebes handeln soll. Jede Signalsendeeinrichtung 1 weist eine Mehrzahl von fest integrierten Tasten 2, 3 mit jeweils spezifischer Funktionszuordnung auf. Die Figur 2 entspricht einer perspektivischen Darstellung einer solchen bevorzugten Signalsendeeinrichtung 1 mit ihrem Gehäuse 9. Darauf wird weiter unten noch eingegangen.

Die Tasten 2, 3 sind von einem Kunden bzw. von einem Gast zum drahtlosen Senden von Signalen in Form von Serviceanweisungen und Servicebewertungen betätigbar. Vorzugsweise und im Ausführungsbeispiel werden die Signale in Form von Bluetooth-Signalen von einer Signalsendeeinrichtung 1 ausgesendet. Ein von einer Signalsendeeinrichtung 1 nach Betätigung einer Taste 2, 3 ausgesendetes Signal wird über eine Mehrzahl von Repeatern 4 übertragen. Im Ausführungsbeispiel ist ein Netzwerk einer Mehrzahl von Repeatern 4 eingerichtet. Die Signale werden über die Repeater 4 zu einem mobilen Empfangsgerät 5 des Servicepersonals übertragen und im Ausführungsbeispiel zusätzlich zu einer zentralen Steuervorrichtung 6.

Empfohlenermaßen und im Ausführungsbeispiel werden die Signale bzw. die Bluetooth-Signale von den Repeatern 4 unmittelbar an ein mobiles Empfangsgerät 5 des Servicepersonals gesendet. Bei dem mobilen Empfangsgerät 5 des Servicepersonals handelt es sich bevorzugt um eine elektronische Uhr mit Bildschirmanzeige bzw. um eine Smartwatch. Auf diese Weise kann ein Mitarbeiter des Servicepersonals unmittelbar auf seiner Smartwatch eine Bestellung eines Kunden erkennen, wobei der Kunde zusätzlich identifiziert wird, beispielsweise über eine Tischnummer im Gastronomiebetrieb.

Die zentrale Steuerungseinrichtung 6 ist bevorzugt und im Ausführungsbeispiel als Mesh-Box ausgebildet. Bewährtermaßen und im Ausführungsbeispiel werden die Signale von der zentralen Steuerungseinrichtung 6 an ein Dashbord 7 zur Darstellung der Serviceanweisungen und/oder der Servicebewertungen übermittelt. Nach bevorzugter Ausführungsform der Erfindung ist das Dashboard 7 als Website eingerichtet. Es liegt im Rahmen der Erfindung, dass die Kunden bzw. Gäste über die erfindungsgemäße Signalsendeeinrichtung 1 unmittelbar Servicebewertungen vornehmen können. Dabei kann die Serviceleistung und/oder das Servicepersonal bewertet werden. Diese Signale bzw. Bewertungssignale werden zweckmäßigerweise von der zentralen Steuerungseinrichtung 6 an eine Website gesendet bzw. an ein Bewertungsportal. Auf diese Weise können Bewertungen unmittelbar in eine Auswertung einfließen und beispielsweise für andere Kunden auf einer Website angezeigt werden.

Optional ist in unmittelbarer Umgebung einer Signalsendeeinrichtung 1 ein Funkmeldeempfänger bzw. Pager 8 angeordnet, wobei ein solcher Pager 8 dem Kunden bzw. dem jeweiligen Tisch im Gastronomiebetrieb zugeordnet ist. Der Pager 8 dient zur Detektion der ihm zugeordneten Signalsendeeinrichtung 1 und zur anschließenden Signalmeldung der Detektion an das Servicepersonal bzw. an ein mobiles Empfangsgerät 5 (Smartwatch) des Servicepersonals. Der Pager 8 ist dabei in unmittelbarer Umgebung der jeweils zugeordneten Signalsendeeinrichtung 1 angeordnet. Die Signalmeldung des Pagers 8 ermöglicht es dem Servicepersonal auf einfache Weise den Kunden bzw. dessen Aufenthaltsort zu orten und somit eine gesendete Serviceanweisung zuzuordnen.

In der Figur 2 ist eine bevorzugte Ausführungsform einer Signalsendeeinrichtung 1 für eine erfindungsgemäße Interaktionsvorrichtung dargestellt. Die Signalsendeeinrichtung 1 ist hier in einem kompakten quaderförmigen Gehäuse 9 aufgenommen. Die Oberseite dieses Gehäuses 9 weist eine ebene und glatte Frontscheibe 10 auf. Diese ebene Frontscheibe 10 ermöglicht zunächst auf einfache Weise den Aufdruck verschiedener Symbole, beispielsweise auch den Aufdruck von Logos oder Werbesymbolen. Außerdem ist die glatte Frontscheibe 10 auf einfache Weise zu reinigen. - Nach sehr bevorzugter Ausführungsform und im Ausführungsbeispiel nach Figur 2 sind die Tasten 2, 3 der Signalsendeeinrichtung 1 als kapazitive Tasten 2, 3 ausgelegt, so dass lediglich eine geringe Fingerberührung des Tastenfeldes an der Frontscheibe 10 ausreicht um das gewünschte Signal mit der Signalsendeeinrichtung 1 abzusenden. Die bevorzugte Ausbildung der Tasten 2, 3 als kapazitive Tasten 2, 3 ermöglicht die einfache Gestaltung des Gehäuses 9 der Signalsendeeinrichtung 1 mit der glatten und ebenen Frontscheibe 10. Im Ausführungsbeispiel nach Figur 2 sind sechs Tasten 2, 3 an der Frontscheibe 10 des Gehäuses 9 vorgesehen. Dabei sind drei Tasten 2.1, 2.2 und 2.3 als Tasten für die Servicebewertungen ausgelegt und drei Tasten 3.1, 3.2 und 3.3 sind als Tasten für die Aussendung von Serviceanweisungen ausgelegt. Die Tasten 2.1, 2.2 und 2.3 für die Servicebewertungen sind mit Emoticons bzw. sogenannten Smileys gekennzeichnet. Die Tasten 3.1, 3.2 und 3.3 für die Serviceanweisungen sind mit den Serviceanweisungen entsprechenden Aufdrucken versehen. Bei Betätigung der Tasten 2, 3 werden - wie oben bereits erläutert - Signale über die Repeater 4 an ein mobiles Empfangsgerät 5 des Servicepersonals gesendet und/oder an die zentrale Steuerungseinrichtung 6 bzw. an ein Dashboard 7.

## Patentansprüche

1. Interaktionsvorrichtung im Servicebereich mit einer Mehrzahl von mobilen stromnetzunabhängigen drahtlos sendenden Signalsendeeinrichtungen (1), wobei jede Signalsendeeinrichtung (1) einem oder mehreren Kunden zugeordnet ist, wobei die Signalsendeeinrichtung (1) eine Mehrzahl von fest integrierten Tasten (2, 3) mit jeweils spezifischer und/oder benutzerdefinierter Funktionszuordnung aufweist, wobei die Tasten (2, 3) von dem Kunden zum drahtlosen Senden von Signalen in Form von Serviceanweisungen und/oder Servicebewertungen betätigbar sind, wobei ein von einer Signalsendeeinrichtung (1) nach Betätigung einer Taste (2, 3) ausgesendetes Signal über eine Mehrzahl von Repeatern (4) übertragen wird und von einem mobilen Empfangsgerät (5) des Servicepersonals empfangen wird und/oder von einer zentralen Steuerungseinrichtung (6) empfangen wird.

2. Vorrichtung nach Anspruch 1, wobei die Signalsendeeinrichtungen (1) batteriebetrieben oder akkumulatorbetrieben ausgelegt sind.

3. Vorrichtung nach einem der Ansprüche 1 oder 2, wobei jede Signalsendeeinrichtung (1) zwei bis zehn, insbesondere zwei bis acht fest integrierte Tasten aufweist.

4. Vorrichtung nach einem der Ansprüche 1 bis 3, wobei die Tasten (2, 3) der Signalsendeeinrichtung (1) als kapazitive Tasten (2, 3) ausgelegt sind.

5. Vorrichtung nach einem der Ansprüche 1 bis 4, wobei die Signale in Form von Bluetooth-Signalen von einer Signalsendeeinrichtung (1) aussendbar sind.

6. Vorrichtung nach einem der Ansprüche 1 bis 5, wobei Signale von den Repeatern (4) unmittelbar an ein mobiles Empfangsgerät (5) des Servicepersonals gesendet werden.

7. Vorrichtung nach einem der Ansprüche 1 bis 6, wobei ein zweidimensionales oder ein dreidimensionales Netzwerk einer Mehrzahl bzw. einer Vielzahl von Repeatern (4) eingerichtet ist.

8. Vorrichtung nach einem der Ansprüche 1 bis 7, wobei bei zumindest einem Teil der Repeater (4) der gegenseitige Abstand von zwei Repeatern (4) mindestens 10 m beträgt.

9. Vorrichtung nach einem der Ansprüche 1 bis 8, wobei ein mobiles Empfangsgerät (5) des Servicepersonals als Armband mit Bildschirm, insbesondere als elektronische Uhr mit Bildschirmanzeige (Smartwatch) ausgebildet ist.

10. Vorrichtung nach einem der Ansprüche 1 bis 9, wobei die Signale von der zentralen Steuerungseinrichtung (6) an ein Dashboard (7) zur Darstellung der Serviceanweisungen und/oder der Servicebewertungen übermittelt werden, wobei das Dashboard (7) insbesondere als Website eingerichtet ist.

11. Vorrichtung nach einem der Ansprüche 1 bis 10, wobei die zentrale Steuerungseinrichtung (6) als Mesh-Box ausgebildet ist.

12. Vorrichtung nach einem der Ansprüche 1 bis 11, wobei in unmittelbarer Umgebung einer Signalsendeeinrichtung (1) ein Funkmeldeempfänger bzw. Pager (8) angeordnet ist und dem Kunden zugeordnet ist, wobei der Pager (8) zur Detektion der ihm zugeordneten Signalsendeeinrichtung (1) sowie zur anschließenden Signalmeldung der Detektion an das Servicepersonal bzw. an ein mobiles Empfangsgerät (5) des Servicepersonals eingerichtet ist.

13. Vorrichtung nach einem der Ansprüche 1 bis 12, wobei der Pager (8) in einer Umgebung der ihm zugeordneten Signalsendeeinrichtung (1) mit einem Radius von weniger als 200 cm, insbesondere von weniger als 150 cm und bevorzugt von weniger als 100 cm angeordnet ist.

14. Vorrichtung nach einem der Ansprüche 1 bis 13, wobei die Signalmeldung des Pagers (8) dem Servicepersonal eine Ortung des Kunden bzw. des Aufenthaltsortes des Kunden und bevorzugt einer gesendeten Serviceanweisung ermöglicht.

15. Vorrichtung nach einem der Ansprüche 1 bis 14, wobei die Signalsendeeinrichtung eine Diebstahlwarneinrichtung aufweist und wobei die Diebstahlwarneinrichtung vorzugsweise mittels zumindest eines Beschleunigungssensors aktivierbar ist.

## Geänderte Patentansprüche

### Geänderte Patentansprüche gemäss Regel 137(2) EPÜ.

1. Interaktionsvorrichtung im Servicebereich mit einer Mehrzahl von mobilen stromnetzunabhängigen drahtlos sendenden Signalsendeeinrichtungen (1), wobei jede Signalsendeeinrichtung (1) einem oder mehreren Kunden zugeordnet ist, wobei die Signalsendeeinrichtung (1) eine Mehrzahl von fest integrierten Tasten (2, 3) mit jeweils spezifischer und/oder benutzerdefinierter Funktionszuordnung aufweist, wobei die Tasten (2, 3) von dem Kunden zum drahtlosen Senden von Signalen in Form von Serviceanweisungen und/oder Servicebewertungen betätigbar sind, wobei ein von einer Signalsendeeinrichtung (1) nach Betätigung einer Taste (2, 3) ausgesendetes Signal über eine Mehrzahl von Repeatern (4) übertragen wird und von einem mobilen Empfangsgerät (5) des Servicepersonals empfangen wird und/oder von einer zentralen Steuerungseinrichtung (6) empfangen wird
wobei ein zweidimensionales oder dreidimensionales Netzwerk einer Mehrzahl bzw. einer Vielzahl von Repeatern (4) eingerichtet ist und wobei die Signale von der zentralen Steuereinrichtung (6) an ein Dashboard (7) zur Darstellung der Serviceanweisungen und/oder der Servicebewertungen übermittelt werden.

2. Vorrichtung nach Anspruch 1, wobei die Signalsendeeinrichtungen (1) batteriebetrieben oder akkumulatorbetrieben ausgelegt sind.

3. Vorrichtung nach einem der Ansprüche 1 oder 2, wobei jede Signalsendeeinrichtung (1) zwei bis zehn, insbesondere zwei bis acht fest integrierte Tasten aufweist.

4. Vorrichtung nach einem der Ansprüche 1 bis 3, wobei die Tasten (2, 3) der Signalsendeeinrichtung (1) als kapazitive Tasten (2, 3) ausgelegt sind.

5. Vorrichtung nach einem der Ansprüche 1 bis 4, wobei die Signale in Form von Bluetooth-Signalen von einer Signalsendeeinrichtung (1) aussendbar sind.

6. Vorrichtung nach einem der Ansprüche 1 bis 5, wobei Signale von den Repeatern (4) unmittelbar an ein mobiles Empfangsgerät (5) des Servicepersonals gesendet werden.

7. Vorrichtung nach einem der Ansprüche 1 bis 6, wobei bei zumindest einem Teil der Repeater (4) der gegenseitige Abstand von zwei Repeatern (4) mindestens 10 m beträgt.

8. Vorrichtung nach einem der Ansprüche 1 bis 7, wobei ein mobiles Empfangsgerät (5) des Servicepersonals als Armband mit Bildschirm, insbesondere als elektronische Uhr mit Bildschirmanzeige (Smartwatch) ausgebildet ist.

9. Vorrichtung nach einem der Ansprüche 1 bis 8, wobei das Dashboard (7) als Website eingerichtet ist.

10. Vorrichtung nach einem der Ansprüche 1 bis 9, wobei die zentrale Steuerungseinrichtung (6) als Mesh-Box ausgebildet ist.

11. Vorrichtung nach einem der Ansprüche 1 bis 10, wobei in unmittelbarer Umgebung einer Signalsendeeinrichtung (1) ein Funkmeldeempfänger bzw. Pager (8) angeordnet ist und dem Kunden zugeordnet ist, wobei der Pager (8) zur Detektion der ihm zugeordneten Signalsendeeinrichtung (1) sowie zur anschließenden Signalmeldung der Detektion an das Servicepersonal bzw. an ein mobiles Empfangsgerät (5) des Servicepersonals eingerichtet ist.

12. Vorrichtung nach einem der Ansprüche 1 bis 11, wobei der Pager (8) in einer Umgebung der ihm zugeordneten Signalsendeeinrichtung (1) mit einem Radius von weniger als 200 cm, insbesondere von weniger als 150 cm und bevorzugt von weniger als 100 cm angeordnet ist.

13. Vorrichtung nach einem der Ansprüche 1 bis 12, wobei die Signalmeldung des Pagers (8) dem Servicepersonal eine Ortung des Kunden bzw. des Aufenthaltsortes des Kunden und bevorzugt einer gesendeten Serviceanweisung ermöglicht.

14. Vorrichtung nach einem der Ansprüche 1 bis 13, wobei die Signalsendeeinrichtung eine Diebstahlwarneinrichtung aufweist und wobei die Diebstahlwarneinrichtung vorzugsweise mittels zumindest eines Beschleunigungssensors aktivierbar ist.
